# EUROPEAN PATENT APPLICATION

(11) **EP 1 868 283 A1**
(43) Date of publication of application: **19.12.2007**
(21) Application number: 06300584.7
(22) Date of filing: 13.06.2006
(51) Int. Cl.: H02K 7/116

(54) **Electric Motor with a Planetary Gear**

(71) Applicant: Alcatel Lucent, 75008 Paris (FR)
(72) Inventor: Jehle, Gerhard, 79848 Gündelwangen (DE); Tascher, Gerhard, 79848 Bonndorf (DE)
(74) Representative: Brose, Gerhard

(57) **Abstract**

The invention relates to an electric motor with a planetary gear flanged thereto, with motor bearing assemblies on both sides, with a gearbox flange, with a fixed annulus with an annular gearing for a first stage (FS) of the planetary gear, with a sun gear and at least three planet gears, in which one of the motor bearing assemblies, the gearbox flange and the fixed annulus with the annular gearing are constructed as a combined constructional element (CCE).

## Description

The invention relates to an electric motor with a planetary gear flanged thereto, with motor bearing assemblies on both sides, with a gearbox flange, with a fixed annulus with an annular gearing for a first stage of the planetary gear, with a sun gear and at least three planet gears according to the preamble of claim 1.

Such electric motors are widely used and are manufactured in very high quantities.

Here the problem arises to manufacture with less effort but nevertheless have a high accuracy, especially with aligning the different parts.

According to the invention this problem is solved by an electric motor according to the teaching of claim 1.

With this three conventional elements with four different functions are replaced by one single element.

Not only the cost of such element is cheaper than the former three elements; also their mounting is much cheaper.

As we have here the tolerance of only one element instead of the tolerances of three elements together with the tolerance of the assembling, the whole motor is build more accurately, which results in higher performance and less noise.

Further embodiments of the invention are to be found in the subclaim and the following description.

In the following the invention will be further explained with the aid of the accompanying drawing:
- Figure 1: shows in a design drawing an essential part of an electric motor with a planetary gear according to the invention, partly in section.
- Figure 2: shows a combined constructive element resulting from the invention in perspective view.

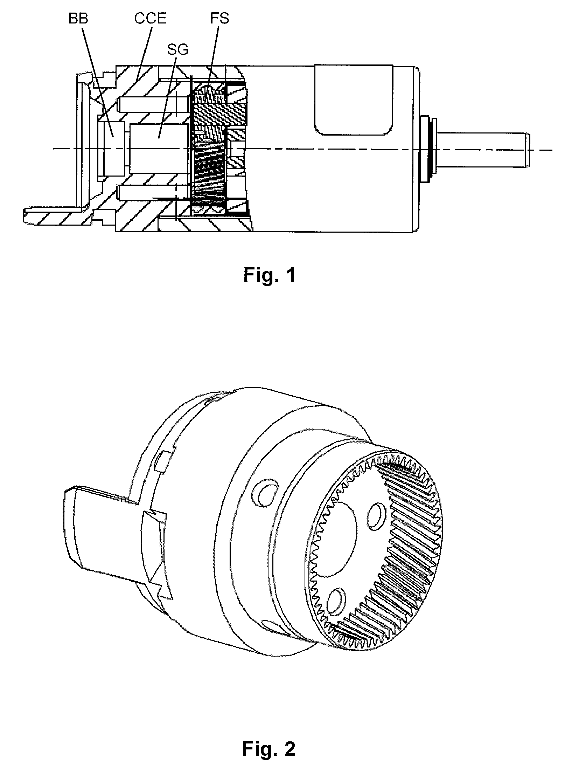

Figure 1 shows the gear part as well as the combined constructional element according to the invention, but without the motor as such, except one of the bearing assemblies. On the left of this drawing in a sectional view we see the combined constructional element CCE hatched diagonally from down left to top right. Leftmost this combined constructional element shows two recesses for the motor's rotor. To the right thereof follows a deeper recess for a ball bearing BB. At the rightmost end of this combined constructional element we see the already installed first stage FS of the planetary gear. The fixed annulus with the annular gearing is only weakly to be seen. From this end another deep recess extends into the combined constructional element, being necessary for the tool for installing a pinion, which here acts as the sun gear SG of the planetary gear.

From the right-hand side we see two deeper recesses looking like boreholes extending into what acts her as gearbox flange. These are necessary for mere considerations concerning production. In the example underlying the invention this combined constructional element is made out of zinc diecasting, but could also be made out of plastics, especially of thermoplastics. Also the finger extending down left has no principle reason, but stems from the actual use.

What can be seen from this drawing is the fact, that in this example the members of the first stage FS are helical gears. With this the gear is less noisy. In other stages this is not appropriate because of their lower speed and the fact that helical gear also has disadvantages over straight gear.

Figure 2 gives a perspective view of a combined construcseen in this drawing is the helical design of the annular gearing in the fixed annulus. Also clearly to be seen is the gearbox flange with the deep recess for assembling the sun gear SG.

What also can be clearly seen here is the smaller diameter of the gearbox flange part and the annulus part with respect to the leftmost part of the combined constructional element. After imposing the gear housing this will lead to a uniform outer diameter. The same will apply at the transition to the motor housing at the left-hand side.

## Claims

1. Electric motor with a planetary gear flanged thereto, with motor bearing assemblies on both sides, with a gearbox flange, with a fixed annulus with an annular gearing for a first stage (FS) of the planetary gear, with a sun gear and at least three planet gears, **characterized in, that** one of the motor bearing assemblies, the gearbox flange and the fixed annulus with the annular gearing are constructed as a combined constructional element (CCE).

2. Electric motor according to claim 1, **characterized in, that** the first stage (FS) of the planetary gear is made of helical gears.
